# EUROPÄISCHE PATENTANMELDUNG

(11) **EP 2 436 587 A1**
(43) Veröffentlichungstag der Anmeldung: **04.04.2012**
(21) Anmeldenummer: 11007910.0
(22) Anmeldetag: 29.09.2011
(51) Int. Cl.: B62K 23/04

(54) **Gasgriff-Drehbegrenzung**

(30) Priorität: 29.09.2010 DE 202010013727 U
(71) Anmelder: Niemerg, Stefan, 48336 Sassenberg (DE)
(72) Erfinder: Niemerg, Stefan, 48336 Sassenberg (DE)
(74) Vertreter: Gesthuysen, von Rohr & Eggert

(57) **Zusammenfassung**

Die Erfmdung betrifft eine Gasgriff Drehbegrenzung zur Begrenzung des maximalen Gasgriffweges bei Fahrzeugen mit einem drehbaren Gasgriff (2) für einen Gaszug (3), insbesondere bei Motorrädern, Motorrollern, Quads, Snowmobilen oder dergleichen, aufweisend ein an den serienmäßig vorhandenen Gasgriff (2) und/oder an das serienmäßig vorhandene Gasgriffgehäuse (1) angepasstes Drehbegrenzerteil (9), wobei das Drehbegrenzerteil (9) lösbar an dem Gasgriff (2) und/oder an und/oder in dem Gasgriffgehäuse (1) befestigbar ist und beim Drehen des Gasgriffs (2) einen nicht-serienmäßigen Anschlag für den Gasgriff (2) zur Begrenzung des maximalen Gasgriffweges bildet,

## Beschreibung

Die Erfindung betrifft eine Gasgriff-Drehbegrenzung zur Begrenzung des maximalen Gasgriffweges bei Fahrzeugen mit einem drehbaren Gasgriff für einen Gaszug, insbesondere bei Motorrädern, Motorrollern, Quads, Snowmobilen oder dergleichen.

Aus dem Stand der Technik sind Gas(griff)weg-Begrenzer bekannt, die an Vergaseranlagen oder Ansaugbrücken montiert werden, um die Motorleistung und/oder die maximale Geschwindigkeit von Fahrzeugen, wie Motorrädern, Motorrollern, Quads, Snowmobilen oder dergleichen, zu begrenzen. Eine Begrenzung der Motorleistung oder der Endgeschwindigkeit des Fahrzeuges kann beispielsweise erforderlich sein, wenn der Fahrer im Besitz einer Fahrerlaubnis einer bestimmten Führerscheinklasse ist, die lediglich den Betrieb von Fahrzeugen mit geringerer Leistung und/oder geringerer Endgeschwindigkeit zulässt. Darüber hinaus kann durch Einbau eines Gasweg-Begrenzers erreicht werden, dass das Fahrzeug in eine kostengünstigere 'V'ersicherungsklasse eingestuft wird. Weitere Gründe für den Einbau von Gasweg-Begrenzungen können eine freiwillige Selbstbeschränkung des Herstellers des Fahrzeuges, eine gewünschte Einhaltung von bestimmten Zulassungsbestimmungen, insbesondere betreffend das Lärm-und Abgasverhalten des Fahrzeuges, oder eine Leistungsreduzierung im Rennsportbereich sein, Die aus dem Stand der Technik bekannten an Vergaseranlagen oder Ansaugbrücken montierbaren Gasweg-Begrenzer weisen jedoch den Nachteil auf, dass der Ein- und Ausbau mit einem hohen Arbeits- und Zeitaufwand verbunden ist, was zu höheren Montagekosten führt.

Aufgabe der vorliegenden Erfindung ist es, einen Gasweg-Begrenzer zur Verfügung zu stellen, der in einfacher und kostengünstiger Weise eine Begrenzung der Motorleistung und/oder der Endgeschwindigkeit eines Fahrzeuges ermöglicht, wobei diese Begrenzung bei Bedarf problemfrei wieder aufzuheben oder zu verändern ist,

Zur Lösung der vorgenannten Aufgabe wird erfindungsgemäß eine Gasgriff-Drehbegrenzung der eingangs genannten Art vorgeschlagen, aufweisend ein an den serienmäßig vorhandenen Gasgriff und/oder an das serienmäßig vorhandene Crasgriffgehäuse angepasstes Drehbegrenzerteil, wobei das Drehbegrenzerteil lösbar an dem Gasgriff und/oder an und/oder in dem Gehäuse befestigbar ist und beim Drehen des Gasgriffs einen nicht-serienmäßigen Anschlag für den Gasgriff zur Begrenzung des maximalen Gasgriffweges bildet,

Vor dem Ausrüsten mit der erfindungsgemäßen Gasgriff Drehbegrenzung lässt sich der Gasgriff um einen vorgegebenen Gasweg drehen, was zu einer entsprechenden Bewegung des Gaszuges und einer damit verbundenen Leistungssteigerung und/oder Erhöhung der Fahrgeschwindigkeit führt. Die erfindungsgemäße Gasgriff-Drehbegrenzung weist ein Drehbegrenzerteil auf, das den möglichen Drehwinkel des Gasgriffs bei einer gewünschten Laststeigerung veningert. Dies kann dadurch erreicht werden_{:} dass das Drehbegrenzerteil entweder an dem drehbaren Gasgriff- bzw. Handgriff oder an und/oder in dem Gasgriffgehäuse montiert wird. Das Drehbegrenzerteil stellt ein nicht-serienmäßiges Hindernis dar, das die maximal mögliche Bewegung des Gasgriffs in Umgangsrichtung limitiert. Durch Einbau des Drehbegrenzerteils der erfindungsgemäßen Gasgriff-Drehbegrenzung lässt sich somit in einfacher Weise bei geringem Zeit- und Arbeitsaufwand und damit sehr kostengünstig die Motorleistung des Fahrzeuges verringern und/oder die Endgeschwindigkeit begrenzen, wobei das Drehbegrenzerteil zu einem späteren Zeitpunkt ohne weiteres wieder ausgebaut werden kann, um eine serienmäßig mögliche maximale Motorleistung und/oder eine maximale Endgeschwindigkeit erreichen zu können.

Die in den Unteransprüchen genannten Merkmale betreffen bevorzugte Weiterbildungen der erfindungsgemäßen Gasgriff-Drehbegrenzung,

Im Einzelnen gibt es eine Vielzahl von Möglichkeiten, die erfindungsgemäße Gasgriff Drehbegrenzung auszugestalten und weiterzubilden, wobei einerseits auf die abhängigen Patentansprüche und andererseits auf die nachfolgende detaillierte Beschreibung eines bevorzugten Ausführungsbeispiels der Erfindung unter Bezugnahme auf die Zeichnung verwiesen wird. In der Zeichnung zeigen
- Fig. 1: eine perspektivische Ansicht eines Gasgriffgehäuses mit einem drehbaren Gasgriff für einen Gaszug eines Fahrzeugs, wie einem Motorrad, einem Motorroller, einem Quad oder einem Snowmobil,
- Fig. 2: eine schematische Darstellung des in Fig, 1 dargestellten Gasgriffsgehäuses mit drehbarem Gasgriff, wobei eine erfindungsgemäße Gasgriff-Drehbegrenzung mit einem Dxehbegrenzerteil zur Begrenzung des maximalen Gasgriffweges vorgesehen ist und wobei das Gasgriffgehäuse transparent dargestellt ist,
- Fig. 3: eine perspektivische Ansicht des in Fig. 2 dargestellten Gasgriffgehäuses mit drehbarem Grasgriff und Drehbegrenzerteil in einer Ansicht von hinten und
- Fig. 4a - 4e: Darstellungen des Drehbegrenzerteils aus den Fig, 2 und 3.

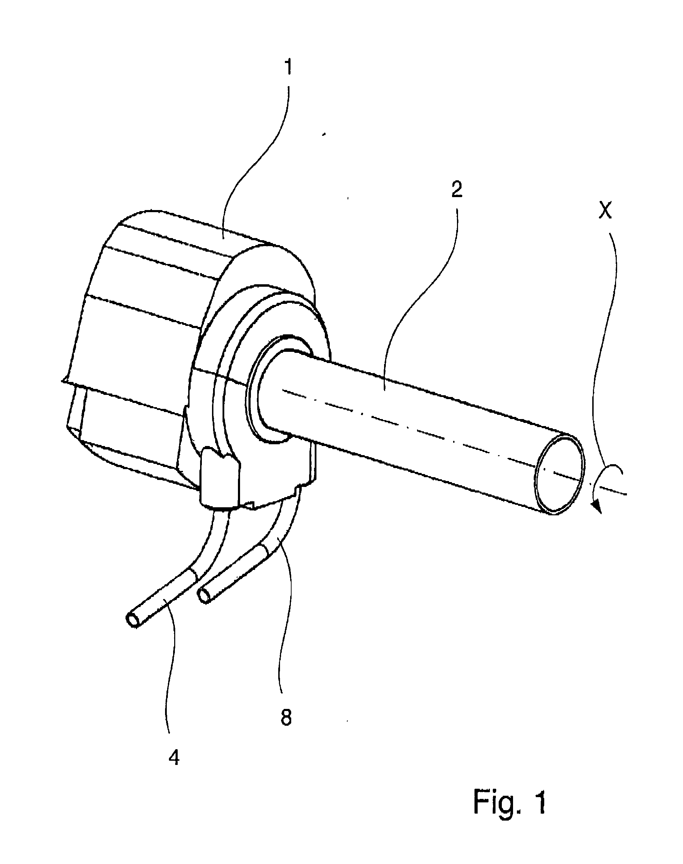

In den Fig. 1 bis 3 ist ein serienmäßig vorhandenes Gasgriffgehäuse 1 mit einem drehbaren Gasgriff 2 für einen Gaszug 3 dargestellt, wobei der Gaszug 3 über einen Krümmer 4 zu einem nicht dargestellten Vergaser eines Fahrzeuges, insbesondere eines Motorrads, Motorrollers, Quads, Snowmobils oder dergleichen, geführt ist. Durch Drehen des Gasgriffs 2 in Pfeilrichtung X wird über den Gaszug 3 eine Stellkraft auf einen Vergaserschieber, eine Steuerscheibe oder dergleichen des Vergasers übertragen, um eine Leistungssteigerung zu bewirken und/oder die Fahrgeschwindigkeit zu erhöhen. Der Gaszug 3 ist dabei über ein Anschlussstück 5 an einer Zugscheibe 6 des Gasgriffs 2 eingehängt, wobei die Zugscheibe 6 zwei sich in radialer Richtung und in Umfangsrichtung erstreckende stegförmige Abschnitte 12, 13 aufweist, zwischen denen eine Nut 7 gebildet wird, in der der Gaszug 3 geführt ist. Nicht dargestellt ist ein Rückholgaszug, der ebenfalls mit der Zugscheibe 6 fest verbunden und über einen weiteren Krümmer 8 in üblicher Weise zum Vergaser geführt ist.

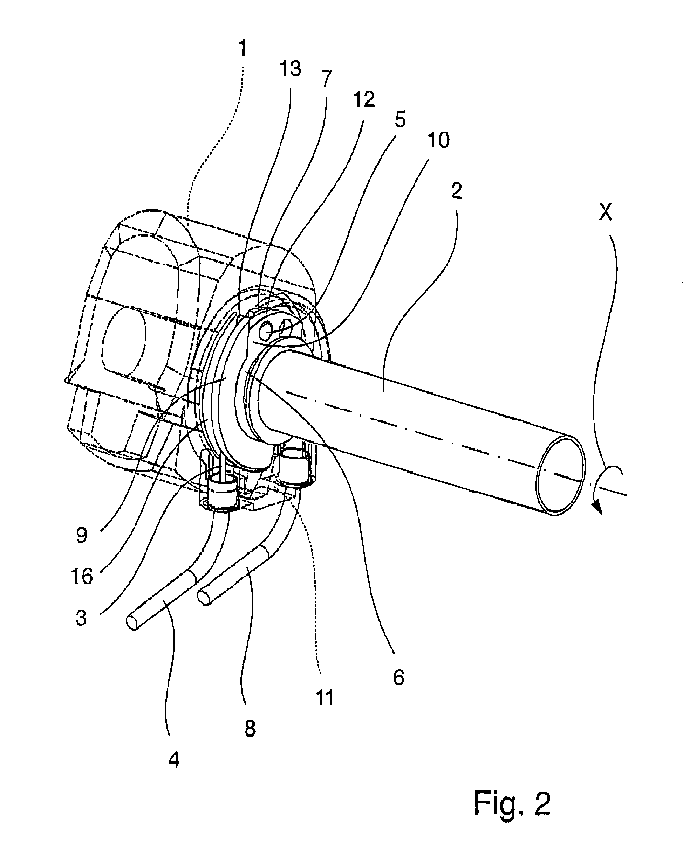

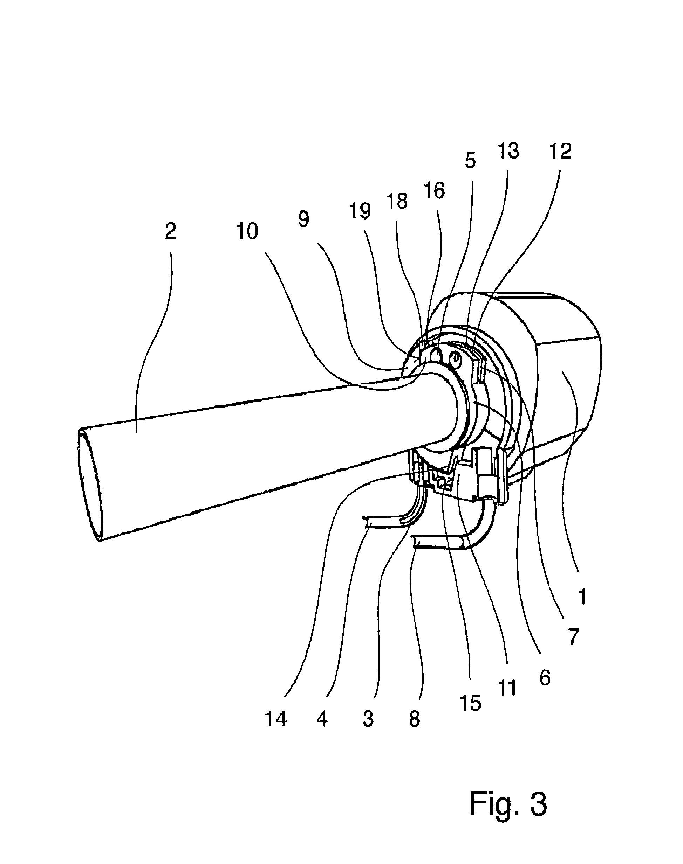

Zur Begrenzung des maximalen Gasgriffweges, d. h. des bei Drehen des Gasgriffs 2 in Pfeilrichtung X maximal erreichbaren Drehwinkels, ist eine Gasgriff-Drehbegrenzung mit einem Drehbegrenzerteil 9 vorgesehen. Das Drehbegrenzerteil 9 ist lösbar an dem Gasgriff 2 befestigt, Beim Drehen des Gasgriffs 2 bildet das Drehbegrenzerteil 9 einen nicht-serienmäßigen Anschlag für den Gasgriff 2 an dem Gasgriffgehäuse 1 zur Begrenzung des maximalen Gasgriffweges und damit zur Verringerung der durch Drehen des Gasgriffs 2 erreichbaren Motorleistung und/oder zur Begrenzung der Endgeschwindigkeit des Fahrzeuges. In den Fig. 2 und 3 ist der Gasgriff 2 jeweils in einer Stellung kurz vor Erreichen des (durch das Drehbegrenzerteil 9 verringerten) maximalen Gasgriffweges gezeigt,

Wie sich aus den Fig. 2 und 3 im Einzelnen ergibt, ist das l7rehbegrenzerteil 9 an dem Gasgriff 2 befestigt und zusammen mit dem Gasgriff 2 drehbar. Der Gasgriff 2 weist einen serienmäßig vorhandenen Begrenzerabschnitt 10 auf, der im serienmäßigen Zustand, d, h, vor dem Einbau des Drehbegrenzerteils 9, den maximalen Gasgriffweg begrenzt durch Anschlagen gegen einen Anschlagabschnitt 11 am Gasgriffgehäuse 1, Der Begrenzerabschnitt 10 wird gebildet durch den in Umfangsrichtung dem Anschlagabschnitt 11 des Gasgriffgehäuses 1 zugewandten Bereich der beiden stegförmigen Abschnitte 12, 13 der Zugscheibe 6. Das Drehbegrenzerteil 9 ist dabei in Pfeilrichtung X des Gasgriffs 2, d, h., in Drehrichtung für eine gewünschte Laststeigerung, dem Begrenzerabschnitt 10 vorgelagert. Dreht der Fahrer den Gasgriff 2, um eine Leistungserhöhung und/oder eine Erhöhung der Geschwindigkeit des Fahrzeuges zu bewirken, so schlägt das Drehbegrenzerteil 9 mit einer unteren Stirnfläche 14 gegen eine Anschlagfläche 15 des Anschlagabschnitts 11, so dass eine weitere Drehung des Gasgriffs 2 nicht möglich ist. Hierdurch wird eine kostengünstige und einfache Möglichkeit zur Verringerung der Motorleistung und/oder der erreichbaren Geschwindigkeit bei Betätigung des Gasgriffs 2 erzielt.

An der Stelle eines an dem Gasgriff 2 befestigbaren Drehbegrenzerteils 9 ist es auch möglich, dass ein anders ausgebildetes Drehbegrenzerteil an dem Gasgriffgehäuse 1 befestigt wird, um einen nicht-serienmäßigen Anschlag für den Begrenzerabschnitt 10 auszubilden, gegen den die Zugscheibe 6 bei Erreichen eines gegenüber dem serienmäßigen Gasgriffweg verringerten Gasgriffwegs zur Anlage kommt. Auch dadurch ist eine Verringerung der maximalen Motorleistung und/oder die Begrenzung der maximalen Geschwindigkeit des Fahrzeuges in einfacher Weise möglich.

Wie sich weiter aus den Fig. 2 und 3 ergibt, ist das Drehbegrenzerteil 9 an die Zugscheibe 6 des Gasgriffs 2 konstruktiv angepasst und an der Zugscheibe 6 befestigbar, insbesondere auf die Zugscheibe 6 aufsteckbar oder aufpressbar, Dadurch ist eine einfache Montage gewährleistet. Darüber hinaus wird sichergestellt, dass das Drehbegrenzerteil 9 sicher an der Zugscheibe 6 gehalten und mit dieser beim Drehen des Gasgriffs 2 gemeinsam bewegt wird. Das Drehbegrenzerteil 9 liegt dabei mit einer oberen Stirnseite gegen den Begrenzerabschnitt 10 an und ist gegen den Begrenzerabschnitt 10 abgestützt.

Die Fig. 2 und 3 zeigen die Stellung des Gasgriffs 2 in etwa bei Erreichen des maximalen Drehwinkels bzw. des maximalen Gasgriffweges, der durch die Länge des Drehbegrenzerteils 9 in Umfangsrichtung des Gasgriffs 2 festgelegt ist. Der maximale Gasgriffweg lässt sich durch unterschiedliche Längen des Drehbegrenzerteils 9 bedarfsweise mehr der weniger weit verkürzen.

Das Drehbegrenzerteil 9 weist eine Umfangsnut 16 als Führung für den Gaszug 3 auf. Durch Führung des Gaszugs 3 in der Umfangsnut 16 wird das Drehbegrenzerteil 9 gegen die Zugscheibe 6 gedrückt, Der Innendurchmesser des Drehbegrenzerteils 9 ist dabei an den Außendurchmesser der Zugscheibe 6 angepasst, so dass durch Aufpressen des Drehbegrenzerteils 9 auf die Zugscheibe 6 eine sichere und insbesondere drehfeste Befestigung des Drehbegrenzerteils 9 an der Zugscheibe 6 gewährleistet ist. Der Innendurchmesser des Drehbegrenzerteils 9 ist dabei geringfügig kleiner als der Außendurchmesser der Zugscheibe 6. Hier kann eine Presspassung von Drehbegrenzerteil 9 und Gasgriff 2 vorgesehen sein. Das Drehbegrenzerteil 9 liegt dann auf der Innenseite vorzugsweise vollflächig gegen die äußere Mantelfläche der Zugscheibe 6 an.

Das Drehbegrenzerteil 9 besteht vorzugsweise aus Kunststoff, insbesondere aus einem thermoplastischen Kunststoff, weiter insbesondere aus Polyoxymethylen (POM). POM zeichnet sich durch eine hohe Festigkeit, Härte und Steifigkeit aus und ermöglicht das Aufpressen des Drehbegrenzerteils 9 auf die Zugscheibe 6,

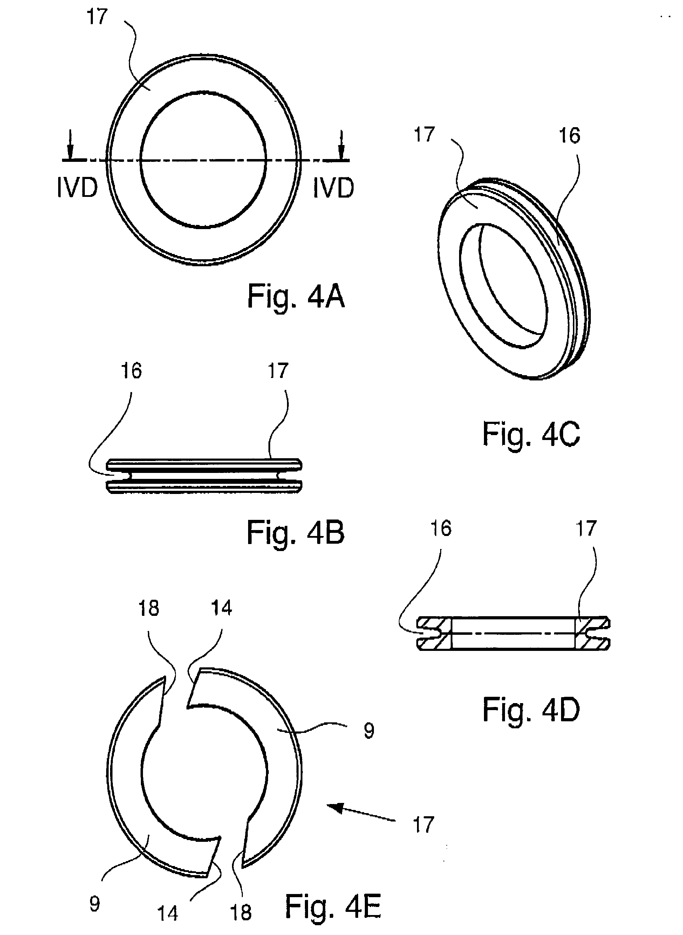

In den Fig. 4a bis 4e ist ein Ringteil 17 zur Herstellung von zwei Drehbegrenzerteilen 9 dargestellt, wobei Fig, 4a eine Draufsicht, Fig. 4b eine Seitenansicht, Fig. 4c eine perspektivische Ansicht von der Seite und Fig. 4d eine Querschnittsansicht entlang der Linie A-A aus Fig. 4a des Ringteils 17 zeigen. In Fig. 4e ist dargestellt, dass zwei Drehbegrenzerteile 9 in einfacher Weise durch Zweiteilung des einstückigen Ringteils 17 erhältlich sind.

Die zur Anlage gegen den Begrenzerabschnitt 10 der Zugscheibe 6 und den Anschlagabschnitt 11 des Gasgriffgehäuses 1 vorgesehenen Stirnflächen 14 und 18 des Drehbegrenzerteils 9 sind unterschiedlich geneigt bzw, weisen eine unterschiedliche Längserstreckung auf. Die Neigung der Stirnfläche 14 ist an die Neigung der Anschlagfläche 15 des Anschlagabschnitts 11 und die Neigung der weiteren Stirnfläche 18 ist an die Neigung der Stirnflächen 19 an den beiden stegförmigen Abschnitten 12, 13 der Zugscheibe 6 angepasst.

## Patentansprüche

1. Gasgriff Drehbegrenzung zur Begrenzung des maximalen Gasgriffweges bei Fahrzeugen mit einem drehbaren Gasgriff (2) für einen Gaszug (3), insbesondere bei Motorrädern, Motorrollern, Quads, Snowmobilen oder dergleichen, aufweisend ein an den serienmäßig vorhandenen Gasgriff (2) und/oder an das serienmäßig vorhandene Gasgriffgehäuse (1) angepasstes Drehbegrenzerteil (9), wobei das Drehbegrenzerteil (9) lösbar an dem Gasgriff (2) und/oder an und/oder in dem Gasgriffgehäuse (1) befestigbar ist und beim Drehen des Gasgriffs (2) einen nicht-serienmäßigen Anschlag für den Gasgriff (2) zur Begrenzung des maximalen Gasgriffweges bildet.

2. Gasgriff-Drehbegrenzung nach Anspruch 1, **dadurch gekennzeichnet, dass** das Drehbegrenzerteil (9) an dem Gasgriff (2) befestigbar und zusammen mit dem Gasgriff (2) drehbar ist, wobei, vorzugsweise, der Gasgriff (2) einen serienmäßig vorhandenen Begrenzerabschnitt (10) zur Begrenzung des maximalen Gasgriff weges durch Anschlagen gegen einen Anschlagabschnitt (11) am Gasgriffgehäuse (1) aufweist und wobei das Drehbegrenzerteil (9) dem Begrenzerabschnitt (10) in Drehrichtung (X) des Gasgriffs (2) bei Laststeigerung vorgelagert ist.

3. Gasgriff-Drehbegrenzung nach Anspruch 1 oder 2, **dadurch gekennzeichnet, dass** das Drehbegrenzerteil (9) an eine Zugscheibe (6) des Gasgriffs (2) angepasst und an der Zugscheibe (6) befestigbar, insbesondere auf die Zugscheibe (6) aufsteckbar oder aufpressbar, ist,

4. Gasgriff-Drehbegrenzung nach einem der vorhergehenden Ansprüche, **dadurch gekennzeichnet, dass** das Drehbegrenzerteil (9) als Ringsegment ausgebildet ist und/oder eine Umfangsnut (16) als Führung für den Gaszug (3) aufweist und/oder dass der Innendurchmesser des Drehbegrenzerteils (9) an einen Außendurchmesser der Zugscheibe (6) angepasst ist.

5. Gasgriff-Drehbegrenzung nach Anspruch 4, **dadurch gekennzeichnet, dass** das Drehbegrenzerteil (9) durch die Führung des Gaszugs (3) in der Umfangsnut (16) an dem Gasgriff (2) gehalten ist.

6. Gasgrifi Drehbegrenzung nach einem der vorhergehenden Ansprüche, **dadurch gekennzeichnet, dass** das Drehbegrenzerteil (9) in einer Leerlaufstellung des Grasgriffs (2) stimseitig gegen den Begrenzerabschnitt (10) abgestützt ist.

7. Gasgriff-Drehbegrenzung nach einem der vorhergehenden Ansprüche, **dadurch gekennzeichnet, dass** das Drehbegrenzerteil (9) aus Kunststoff, insbesondere aus POM, besteht.

8. Gasgriff Drehbegrenzung nach einem der vorhergehenden Ansprüche, **dadurch gekennzeichnet, dass** das Drehbegrenzerteil (9) durch Zweiteilung eines Ringteils (17) erhältlich ist.
